# EUROPEAN PATENT APPLICATION

(11) **EP 2 921 043 A1**
(43) Date of publication of application: **23.09.2015**
(21) Application number: 13854518.1
(22) Date of filing: 07.11.2013
(51) Int. Cl.: A01G 1/00

(54) **ARTIFICIAL SOIL MEDIUM**

(30) Priority: 19.11.2012 JP 2012252894
(71) Applicant: Toyo Tire & Rubber Co., Ltd., Osaka-shi, Osaka 550-8661 (JP)
(72) Inventor: NAKAJIMA, Sachiko, Osaka-shi Osaka 550-8661 (JP); IOROI, Yoshiyuki, Osaka-shi Osaka 550-8661 (JP); ISHIZAKA, Nobuyoshi, Osaka-shi Osaka 550-8661 (JP)
(74) Representative: Hart-Davis, Jason
(86) International application number: PCT/JP2013/080134
(87) International publication number: WO 2014/077183

(57) **Abstract**

Provided is a technique of continuously supplying moisture to a plant to be grown over a long period of time or highly controlling the amount of moisture supplied to a plant to be grown, depending on the plant, in an artificial soil medium including a collection of artificial soil particles. An artificial soil medium 100 includes a plurality of artificial soil particles 50 including a base 10 capable of absorbing and releasing moisture. The plurality of artificial soil particles 50 include a plurality of types of artificial soil particles 50 having different moisture absorption and release characteristics indicating a state in which the base 10 absorbs moisture or a state in which the base 10 releases moisture. The plurality of types of artificial soil particles 50 are configured to allow moisture to move between the different types of artificial soil particles 50.

## Description

### TECHNICAL FIELD

The present invention relates to artificial soil media usable in plant factories, etc.

### BACKGROUND ART

There have in recent years been an increasing number of plant factories, which allow for growing of plants, such as vegetables, etc., in an environment under controlled growth conditions. In most conventional plant factories, leaf vegetables, such as lettuce, etc., are hydroponically grown. More recently, there has been a move toward attempts to grow root vegetables, which are not suitable for hydroponic cultivation, in a plant factory. In order to grow root vegetables in a plant factory, it is necessary to develop an artificial soil which has good basic soil functions and high quality, and is easy to handle. Artificial soils have been required to have particular functions which are difficult for natural soil to achieve, such as a reduction in the number of times a plant is watered, etc.

Among the artificial soil-related techniques which have been so far developed is a soil conditioner including a dispersed mixture of a naturally-occurring vegetable organic material, such as a peat moss, etc., and a mineral material, such as zeolite, etc. (see, for example, Patent Document 1).

Patent Document 1 describes such a soil conditioner which has better water retentivity than that of a soil conditioner including only either a naturally-occurring vegetable organic material or a mineral material. Patent Document 1 states that, therefore, the soil conditioner can improve soils with poor water retention.

There is a soil penetrant which includes a carrier including a porous substance and a non-porous substance, and a surfactant attached to the carrier (see, for example, Patent Document 2). Patent Document 2 describes such a soil penetrant in which a surfactant attached to the non-porous substance is quickly released due to watering to diffuse into soil, thereby immediately exhibiting the effect of allowing water to penetrate, while a surfactant is held in small holes of the porous substance, and therefore, is not quickly released due to watering. Patent Document 2 states that, therefore, the effect of allowing water to penetrate can be stably exhibited over a long period of time.

There is also a plant growing base material including an acid-denatured thermoplastic resin foam material and a water absorbent resin in order to reduce the number of times of watering (see, for example, Patent Document 3). Patent Document 3 describes such a plant growing base material which is a combination of an acid-denatured thermoplastic resin which does not have excessive hydrophilicity and a water absorbent resin which has good water retentivity. Patent Document 3 states that, therefore, the plant growing base material has sufficient water absorbency and can significantly reduce the number of times of watering.

There is also a growing soil which is a combination of a bulking agent, such as Akadama soil, etc., and a water absorbent polymer (see, for example, Patent Document 4). Patent Document 4 describes such a growing soil which has good water retentivity and air absorption capability (air permeability). Patent Document 4 states that, therefore, the growing soil prevents a plant from dying or having root rot even if the plant is not watered over a long period of time.

### CITATION LIST

### PATENT LITERATURE

Patent Document 1: Japanese Unexamined Patent Application Publication No. H11-209760 (see, particularly, claim 1)
Patent Document 2: Japanese Unexamined Patent Application Publication No. H11-256160 (see, particularly, paragraph 0011)
Patent Document 3: Japanese Unexamined Patent Application Publication No. 2002-272266 (see, particularly, paragraph 0048)
Patent Document 4: Japanese Unexamined Patent Application Publication No. 2003-250346 (see, particularly, paragraph 0017)

### SUMMARY OF INVENTION

### TECHNICAL PROBLEM

When an artificial soil is developed, it is, for example, desirable to impart, to the artificial soil, a control function capable of supplying suitable moisture or nutrients to a plant to be grown while achieving the ability to grow the plant which is similar to that of natural soil. In particular, the function of controlling the amount of supplied moisture is important in order to reduce the number of times a plant is watered, or provide an optimum schedule for growing a plant, depending on the plant type. If an artificial soil can control moisture absorption and release characteristics, i.e., release of moisture from the artificial soil to the outside and absorption of moisture into the artificial soil from the outside, this particular function, which is not possessed by natural soil, can provide a high added value to the artificial soil.

However, the techniques of Patent Documents 1 to 4 related to artificial soil are all directed to design of individual artificial soil particles. It is difficult to significantly change or improve the functionality of an artificial soil medium only by modifying individual minute artificial soil particles. It is also difficult to improve the functions related to moisture, such as water retentivity, etc., only by modifying individual artificial soil particles. For example, as in Patent Documents 2 and 3, different artificial soil particles may include different materials to have different moisture release characteristics. In this case, however, when an artificial soil medium is formed of a collection of such artificial soil particles, a difference in function between each individual artificial soil particle is not likely to appear on the entire artificial soil medium, while an average of the characteristics of the artificial soil particles is exhibited, and therefore, the designed function is not always exhibited.

With the above problems in mind, the present invention has been made. It is an object of the present invention to provide a technique of continuously supplying moisture to a plant to be grown over a long period of time, and highly controlling the amount of moisture supplied to a plant to be grown, depending on the plant, in an artificial soil medium including a collection of artificial soil particles.

### SOLUTION TO PROBLEM

To achieve the object, an artificial soil medium according to the present invention includes a plurality of artificial soil particles including a base capable of absorbing and releasing moisture. The plurality of artificial soil particles include a plurality of types of artificial soil particles having different moisture absorption and release characteristics indicating a state in which the base absorbs moisture or a state in which the base releases moisture.

According to the artificial soil medium thus configured, a plurality of types of artificial soil particles having different moisture absorption and release characteristics constitute the artificial soil medium. Therefore, the different moisture absorption and release characteristics of the different types of artificial soil particles are combined to mutually complement. Moreover, a synergistic effect appears in the moisture absorption and release characteristics of the mixture of the artificial soil particles. For example, one of the artificial soil particles may have early absorption and release type moisture absorption and release characteristics, and another artificial soil particle may have late absorption and release type moisture absorption and release characteristics. In this case, these two types of moisture absorption and release characteristics mutually complement, or a synergistic effect appears in the moisture absorption and release characteristics, and therefore, the artificial soil medium can release moisture for an entire plant growth period. Thus, compared to an artificial soil medium including a single type of artificial soil particles, the artificial soil medium of this configuration has broader moisture absorption and release characteristics, and therefore, can continuously supply moisture to a plant to be grown over a long period of time, leading to a reduction in the number of times of watering. Also, if the moisture absorption and release characteristics of the artificial soil particles are changed, the amount of moisture released from the artificial soil particles or the timing of moisture release from the artificial soil particles can be arbitrarily adjusted, and therefore, an artificial soil medium can be provided in which the amount of supplied moisture is highly controlled, depending on a plant to be grown (i.e., an optimum schedule for releasing moisture is provided).

In the artificial soil medium of the present invention, the plurality of types of artificial soil particles are preferably configured to allow moisture to move between the different types of artificial soil particles.

According to the artificial soil medium thus configured, moisture can move between the different types of artificial soil particles. Therefore, by setting the moisture absorption and release characteristics of each artificial soil particle, the amount, timing, etc., of moisture released from the artificial soil particle can be highly controlled. As a result, the artificial soil medium can be set to have an optimum schedule for releasing moisture.

In the artificial soil medium of the present invention, the plurality of types of artificial soil particles preferably include a first artificial soil particle and a second artificial soil particle having the different moisture absorption and release characteristics. The moisture absorption and release characteristics of the first artificial soil particle are preferably more gradual than the moisture absorption and release characteristics of the second artificial soil particle.

According to the artificial soil medium thus configured, the first artificial soil particle has more gradual moisture absorption and release characteristics than those of the second artificial soil particle. Therefore, after the second artificial soil particle has released moisture, the first artificial soil particle continues to release moisture. As a result, moisture can be continuously supplied to a plant to be grown over a long period of time, resulting in a reduction in the number of times of watering.

In the artificial soil medium of the present invention, the plurality of types of artificial soil particles preferably include (a) a first artificial soil particle having the moisture absorption and release characteristics adapted to supply moisture mainly to a plant to be grown, and (b) a second artificial soil particle having the moisture absorption and release characteristics adapted to supply moisture mainly to the first artificial soil particle.

According to the artificial soil medium thus configured, the first artificial soil particle is configured as a late absorption and release type artificial soil particle which has moisture absorption and release characteristics adapted to supply moisture mainly to a plant to be grown, and the second artificial soil particle is configured as an early absorption and release type artificial soil particle which has moisture absorption and release characteristics adapted to supply moisture mainly to the first artificial soil particle. Therefore, moisture moves from the early absorption and release type second artificial soil particle to the late absorption and release type first artificial soil particle, and therefore, moisture is always supplied to the late absorption and release type first artificial soil particle. Thus, if the moisture absorption and release characteristics are set so that moisture moves between the first and second artificial soil particles in a particular manner, a significant synergistic effect appears in the moisture absorption and release characteristics of the mixture of the artificial soil particles. As a result, moisture can be continuously supplied to a plant to be grown over a long period of time, resulting in a reduction in the number of times of watering. Also, the amount of moisture supplied to a plant to be grown can be highly controlled, depending on the plant.

In the artificial soil medium of the present invention, the plurality of types of artificial soil particles preferably include (a) a first artificial soil particle including, as the base, a porous product produced by granulating a plurality of fillers having a small hole, and (b) a second artificial soil particle including, as the base, a fibrous-mass product produced by aggregating fibers.

According to the artificial soil medium thus configured, the first artificial soil particle is configured as a late absorption and release type artificial soil particle which has, as a base, a porous product produced by granulating a plurality of fillers having a small hole, and the second artificial soil particle is configured as an early absorption and release type artificial soil particle which has, as a base, a fibrous-mass product produced by aggregating fibers. Therefore, as in the foregoing, a significant synergistic effect appears in the moisture absorption and release characteristics of the mixture of the artificial soil particles. As a result, moisture can be continuously supplied to a plant to be grown over a long period of time, resulting in a reduction in the number of times of watering. Also, the amount of moisture supplied to a plant to be grown can be highly controlled, depending on the plant.

In the artificial soil medium of the present invention, the mixture ratio of the first and second artificial soil particles is preferably adjusted to 30:70 to 70:30.

According to the artificial soil medium thus configured, the mixture ratio of the first and second artificial soil particles is adjusted to 30:70 to 70:30. Therefore, a well-balanced mixture of the first and second artificial soil particles is provided, and therefore, these two types of moisture absorption and release characteristics mutually complement, or a synergistic effect appears in the moisture absorption and release characteristics. As a result, moisture can be continuously supplied to a plant to be grown over a long period of time, resulting in a reduction in the number of times of watering. Also, the amount of moisture supplied to a plant to be grown can be highly controlled, depending on the plant.

In the artificial soil medium of the present invention, ion exchange capability is preferably imparted to at least one of the plurality of types of artificial soil particles.

According to the artificial soil medium thus configured, ion exchange capability is imparted to at least one of the plurality of types of artificial soil particles. Therefore, the artificial soil particle is allowed to hold a fertilizer component required for the growth of a plant. Therefore, the artificial soil medium has the ability to grow a plant, which is similar to that of natural soil.

In the artificial soil medium of the present invention, the plurality of artificial soil particles preferably have a particle size of 0.2-10 mm.

According to the artificial soil medium thus configured, the plurality of artificial soil particles have a particle size of 0.2-10 mm. As a result, an easy-to-handle artificial soil suitable for, particularly, the growth of root vegetables can be provided.

### BRIEF DESCRIPTION OF DRAWINGS

[FIG. 1] FIG. 1 is a diagram schematically showing an artificial soil medium according to the present invention including a plurality of artificial soil particles.
[FIG. 2] FIG. 2 is a diagram schematically showing an artificial soil particle included in the artificial soil medium of the present invention.
[FIG. 3] FIG. 3 is a diagram for describing an artificial soil medium including a mixture of a late absorption and release type first artificial soil particle and an early absorption and release type second artificial soil particle at a mixture ratio of about 50:50.
[FIG. 4] FIG. 4 is a graph showing a relationship between a moisture content rate and a pF value which are moisture absorption and release characteristics of the first and second artificial soil particles.
[FIG. 5] FIG. 5 is a diagram for describing behavior of moisture between the first and second artificial soil particles in a stepwise manner.
[FIG. 6] FIG. 6 is a diagram for describing behavior of nutrients between the first and second artificial soil particles in a stepwise manner.
[FIG. 7] FIG. 7 is a graph showing a relationship between the time for which moisture is retained and the amount of retained moisture, of the first artificial soil particle, the second artificial soil particle, and a mixture of the first and second artificial soil particles.

### DESCRIPTION OF EMBODIMENTS

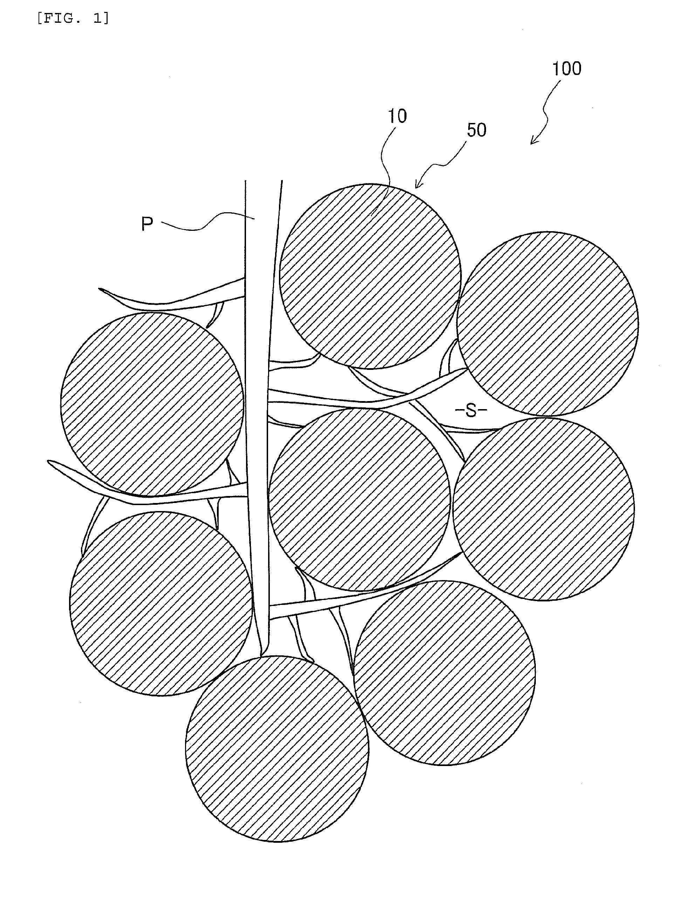

Embodiments relating to an artificial soil medium according to the present invention will now be described with reference to FIGS. 1-7. Note that the present invention is not intended to be limited to configurations described below in the embodiments and the drawings.

### <Artificial Soil Particle>

FIG. 1 is a diagram schematically showing an artificial soil medium 100 according to the present invention including a plurality of artificial soil particles 50. The artificial soil particle 50 includes a base 10 which can absorb and release moisture. The base 10 includes a water retention material. The water retention material can absorb and retain moisture from the external environment and release retained moisture to the external environment. As used herein, the "external environment" means an environment external to the artificial soil particle 50. In the artificial soil medium 100 of FIG. 1 which is a collection of the artificial soil particles 50, an interstice S formed between the artificial soil particles 50 corresponds to the external environment. Moisture required for the growth of a plant P may be present in the external environment. The artificial soil particle 50 controls a state in which the base 10 absorbs moisture from the external environment (moisture absorption characteristics) or a state in which the base 10 releases retained moisture to the external environment (moisture release characteristics), whereby the timing and amount of moisture supply to the plant P to be grown can be adjusted. As used herein, the "moisture absorption characteristics" and the "moisture release characteristics" mean states represented by a moisture-related physical quantity or time, such as the amount of absorbed moisture, the timing of moisture absorption, the amount of released moisture, the timing of moisture release, the amount of retained moisture, the content of moisture, etc. As used herein, the "moisture absorption characteristics," the "moisture release characteristics," and other moisture-related characteristics, such as a wettability, pF value, etc., described below, are collectively referred to as "moisture absorption and release characteristics."

### (First Artificial Soil Particle)

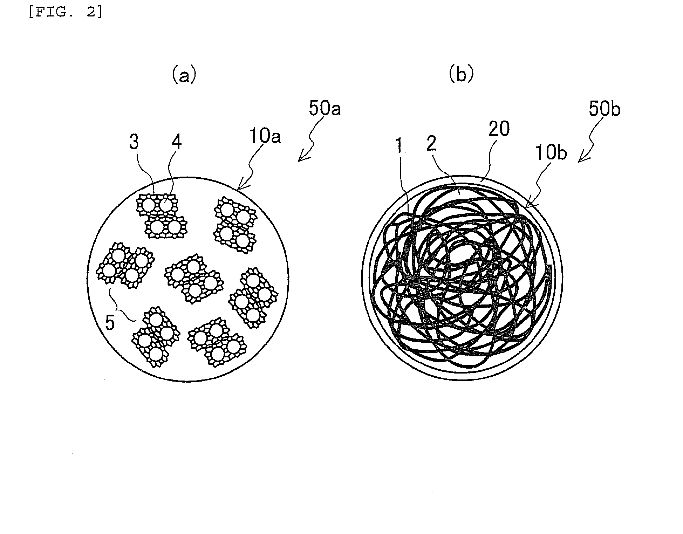

FIG. 2 is a diagram schematically showing the artificial soil particle 50 included in the artificial soil medium 100 of the present invention, illustrating two different configurations of the base 10. FIG. 2(a) shows an artificial soil particle 50a which is of a first type which includes a porous product 10a as the base 10. The porous product 10a is a collection of fillers 3 in the form of a grain. In the porous product 10a, the fillers 3 do not necessarily need to be in contact with each other. If the fillers 3 maintain a relative positional relationship within a predetermined range in a single particle with a binder, etc., interposed between each filler, the fillers 3 are considered to be clustered together in the form of a grain. The filler 3 included in the porous product 10a has a large number of small holes 4 extending from the surface to the inside. The small hole 4 is in various forms. For example, when the filler 3 is zeolite, a void which exists in the crystal structure of the zeolite is the small hole 4. When the filler 3 is hydrotalcite, an interlayer space which exists in the layered structure of the hydrotalcite is the small hole 4. In other words, the term "small hole" as used herein means a void, interlayer space, space, etc., that exist in the structure of the filler 3 and are not limited to "hole-like" forms. Note that a communication hole 5 ranging from the submicrometer to the submillimeter scale which can retain moisture is formed between the fillers 3. The small holes 4 are distributed and arranged around the communication hole 5. The communication hole 5 retains mainly moisture, and therefore, a certain level of water retentivity can be imparted to the artificial soil particle 50a. The particle size of the artificial soil particle 50a is adjusted to 0.2 to 10 mm, preferably 0.5 to 10 mm.

The size of the small hole 4 of the filler 3 ranges from the subnanometer to the submicrometer scale. For example, the size of the small hole 4 may be set to about 0.2 to 800 nm. When the filler 3 is zeolite, the size (diameter) of the void in the crystal structure of the zeolite is about 0.3 to 1.3 nm. When the filler 3 is hydrotalcite, the size (distance) of the interlayer space in the layered structure of the hydrotalcite is about 0.3 to 3.0 nm. Alternatively, the filler 3 may be formed of an organic porous material. In this case, the diameter of the small hole 4 is about 0.1 to 0.8 µm. The size of the small hole 4 of the filler 3 is measured using an optimum technique which is selected from gas adsorption, mercury intrusion, small-angle X-ray scattering, image processing, etc., and a combination thereof, depending on the state of an object to be measured.

The small hole 4 of the filler 3 is preferably formed of a material having ion exchange capability so that the artificial soil particle 50a has sufficient fertilizer retentivity. In this case, the material having ion exchange capability may be a material having cation exchange capability, a material having anion exchange capability, or a mixture thereof. Alternatively, a porous material (e.g., a polymeric foam material, glass foam material, etc.) which does not have ion exchange capability may be separately prepared, the above material having ion exchange capability may be introduced into the small holes of the porous material by injection, impregnation, etc., and the resultant material may be used as the filler 3. Examples of the material having cation exchange capability include cation exchange minerals, humus, and cation exchange resins. Examples of the material having anion exchange capability include anion exchange minerals and anion exchange resins.

Examples of the cation exchange minerals include smectite minerals such as montmorillonite, bentonite, beidellite, hectorite, saponite, stevensite, etc., mica minerals, vermiculite, zeolite, etc. Examples of the cation exchange resins include weakly acidic cation exchange resins and strongly acidic cation exchange resins. Of them, zeolite or bentonite is preferable. The cation exchange minerals and the cation exchange resins may be used in combination. The cation exchange capacity of the cation exchange mineral and cation exchange resin is set to 10 to 700 meq/100 g, preferably 20 to 700 meq/100 g, and more preferably 30 to 700 meq/100 g. When the cation exchange capacity is less than 10 meq/100 g, sufficient nutrients cannot be taken in, and nutrients taken in are likely to flow out quickly due to watering, etc. On the other hand, even when the cation exchange capacity is greater than 700 meq/100 g, the fertilizer retentivity is not significantly improved, which is not cost-effective.

Examples of the anion exchange minerals include natural layered double hydroxides having a double hydroxide as a main framework, such as hydrotalcite, manasseite, pyroaurite, sjogrenite, patina, etc., synthetic hydrotalcite and hydrotalcite-like substances, and clay minerals such as allophane, imogolite, kaolinite, etc. Examples of the anion exchange resins include weakly basic anion exchange resins and strongly basic anion exchange resins. Of them, hydrotalcite is preferable. The anion exchange minerals and the anion exchange resins may be used in combination. The anion exchange capacity of the anion exchange mineral and anion exchange resin is set to 5 to 500 meq/100 g, preferably 20 to 500 meq/100 g, and more preferably 30 to 500 meq/100 g. When the anion exchange capacity is less than 5 meq/100 g, sufficient nutrients cannot be taken in, and nutrients taken in are likely to flow out quickly due to watering, etc. On the other hand, even when the anion exchange capacity is greater than 500 meq/100 g, the fertilizer retentivity is not significantly improved, which is not cost-effective.

When the filler 3 is formed of a natural inorganic mineral, such as zeolite or hydrotalcite, the fillers 3 may be clustered together in the form of a grain (the artificial soil particle 50a) by preferably utilizing the gelling reaction of a polymeric gelling agent. Examples of the gelling reaction of a polymeric gelling agent include a gelling reaction between an alginate, propylene glycol alginate ester, gellan gum, glucomannan, pectin, or carboxymethyl cellulose (CMC), and a multivalent metal ion, and a gelling reaction caused by a double helix structure forming reaction of a polysaccharide, such as carrageenan, agar, xanthan gum, locust bean gum, tara gum, etc. Of them, a gelling reaction between an alginate and a multivalent metal ion will be described. Sodium alginate, which is an alginate, is a neutral salt formed by the carboxyl group of alginic acid bonding with a Na ion. While alginic acid is insoluble in water, sodium alginate is water-soluble. When an aqueous solution of sodium alginate is added to an aqueous solution containing a multivalent metal ion (e.g., a Ca ion), sodium alginate molecules are ionically cross-linked together to form a gel. In this embodiment, the gelling reaction may be performed by the following steps. Initially, an alginate is dissolved in water to formulate an aqueous solution of the alginate, and the fillers 3 are added to the aqueous alginate solution, followed by thorough stirring, to form a mixture solution which is the aqueous alginate solution in which the fillers 3 are dispersed. Next, the mixture solution is dropped into an aqueous solution of a multivalent metal ion, thereby gelling the alginate contained in the mixture solution into grains. Thereafter, the gelled particles are collected, followed by washing with water and then thorough drying. As a result, the artificial soil particle 50a is obtained which is a grain formed of an alginate gel including an alginate and a multivalent metal ion, in which the fillers 3 are dispersed.

Examples of an alginate which can be used in the gelling reaction include sodium alginate, potassium alginate, and ammonium alginate. These alginates may be used in combination. The concentration of the aqueous alginate solution is 0.1 to 5% by weight, preferably 0.2 to 5% by weight, and more preferably 0.2 to 3% by weight. When the concentration of the aqueous alginate solution is less than 0.1% by weight, the gelling reaction is less likely to occur. When the concentration of the aqueous alginate solution exceeds 5% by weight, the viscosity of the aqueous alginate solution is excessively high, and therefore, it is difficult to stir the mixture solution containing the filler 3 added, and drop the mixture solution to the aqueous multivalent metal ion solution.

The aqueous multivalent metal ion solution to which the aqueous alginate solution is dropped may be any aqueous solution of a divalent or higher-valent metal ion that reacts with the alginate to form a gel. Examples of such an aqueous multivalent metal ion solution include an aqueous solution of a multivalent metal chloride such as calcium chloride, barium chloride, strontium chloride, nickel chloride, aluminum chloride, iron chloride, cobalt chloride, etc., an aqueous solution of a multivalent metal nitrate such as calcium nitrate, barium nitrate, aluminum nitrate, iron nitrate, copper nitrate, cobalt nitrate, etc., an aqueous solution of a multivalent metal lactate such as calcium lactate, barium lactate, aluminum lactate, zinc lactate, etc., and an aqueous solution of a multivalent metal sulfate such as aluminum sulfate, zinc sulfate, cobalt sulfate, etc. These aqueous multivalent metal ion solutions may be used in combination. The concentration of the aqueous multivalent metal ion solution is 1 to 20% by weight, preferably 2 to 15% by weight, and more preferably 3 to 10% by weight. When the concentration of the aqueous multivalent metal ion solution is less than 1% by weight, the gelling reaction is less likely to occur. When the concentration of the aqueous multivalent metal ion solution exceeds 20% by weight, it takes a long time to dissolve the metal salt, and an excessive amount of the material is required, which is not cost-effective.

The fillers 3 for forming the artificial soil particle 50a may be granulated using a binder instead of the above gelling reaction. For example, a binder, solvent, etc., are added to the filler 3, followed by mixture, and the mixture is introduced into a granulation machine, followed by a known granulation technique, such as tumbling granulation, fluidized bed granulation, agitation granulation, compression granulation, extrusion granulation, pulverization granulation, melting granulation, spraying granulation, etc. The grains thus obtained are optionally dried and classified. Thus, the production of the artificial soil particle 50a is completed. Alternatively, a binder and optionally a solvent, etc., may be added to the filler 3, followed by kneading, the mixture may be dried into a block, and the block may be pulverized using a suitable pulverization means, such as a mortar and a pestle, hammer mill, roll crusher, etc. Although the grains thus obtained may be directly used as the artificial soil particles 50a, the grains may preferably be sieved to obtain ones having a desired particle size.

The binder may be either an organic binder or an inorganic binder. Examples of the organic binder include synthetic resin binders such as a polyolefin binder, polyvinyl alcohol binder, polyurethane binder, polyvinyl acetate binder, etc., and naturally-occurring binders such as polysaccharides (e.g., starch, carrageenan, xanthan gum, gellan gum, alginic acid, etc.), animal proteins (e.g., an animal glue, etc.), etc. Examples of the inorganic binder include silicate binders such as water glass, etc., phosphate binders such as aluminum phosphate, etc., borate binders such as aluminum borate, etc., and hydraulic binders such as cement, etc. The organic and inorganic binders may be used in combination.

When the filler 3 is formed of an organic porous material, the artificial soil particle 50a may be produced by a technique similar to the above filler granulation technique using a binder. Alternatively, the artificial soil particle 50a may be produced as follows: the fillers 3 are heated to a temperature which is higher than or equal to the melting point of the organic porous material (a polymeric material, etc.) included in the filler 3 so that the surfaces of the fillers 3 are bonded together by thermal fusion and thereby formed into a grain. In this case, a grain which the fillers 3 are clustered together can be obtained without using a binder. Examples of such an organic porous material include an organic polymeric foam material which is a foam of an organic polymeric material, such as polyethylene, polypropylene, polyurethane, polyvinyl alcohol, cellulose, etc., and an organic polymer porous product having an open-cell foam structure which is produced by heating and melting powder of the organic polymeric material.

Although not shown, a control layer which is similar to that of a second type artificial soil particle 50b described below may be provided on an outer surface portion of the base 10 of the artificial soil particle 50a. The moisture absorption and release characteristics of the artificial soil particle 50a can be more precisely controlled using the control layer.

The thus-configured artificial soil particle 50a including, as the base 10, the porous product 10a obtained by granulation of the fillers 3 has relatively great difficulty in absorbing moisture from the external environment and relatively great difficulty in releasing moisture to the external environment, and therefore, functions as a late absorption and release type artificial soil particle (the first artificial soil particle 50a) which absorbs and releases moisture at a slow rate. The first artificial soil particle 50a has more gradual moisture release characteristics than those of the second artificial soil particle 50b described below.

### (Second Artificial Soil Particle)

The artificial soil particle 50b of FIG. 2(b) is of a second type which includes, as the base 10, a fibrous-mass product 10b. The fibrous-mass product 10b is an aggregate of fibers 1. A void 2 is formed between the fibers 1 included in the fibrous-mass product 10b. The fibrous-mass product 10b can retain moisture in the void 2. Therefore, the conditions of the void 2 (e.g., the size, number, shape, etc. of the void 2) have a relation to the amount of moisture which can be retained by the fibrous-mass product 10b, i.e., water retentivity. The conditions of the void 2 can be adjusted by changing the amount (density) of the fibers 1 which are used, the type, thickness, or length of the fibers 1, etc., during the formation of the base 10. Note that, as to dimensions of the fiber 1, the thickness is preferably 1-100 µm, and the length is preferably 0.1-10 mm. The particle size of the artificial soil particle 50b is adjusted to 0.2-10 mm, preferably 0.5-10 mm.

In the fibrous-mass product 10b, the fiber 1 is preferably a hydrophilic fiber in order to allow the fibrous-mass product 10b to retain moisture therein. As a result, the water retentivity of the fibrous-mass product 10b can be further improved. The type of the fiber 1 may be either a natural fiber or a synthetic fiber, and suitably selected, depending on the type of the artificial soil particle 50b. Examples of the preferable hydrophilic fiber include natural fibers such as cotton, wool, rayon, cellulose, etc., and synthetic fibers such as vinylon, urethane, nylon, acetate, etc. Of these fibers, cotton and vinylon are more preferable. As the fiber 1, a combination of a natural fiber and a synthetic fiber may be used.

When the fibrous-mass product 10b is configured, another water retention material (hereinafter referred to as a "second water retention material" in order to distinguish this from the fiber 1, which is a water retention material) may be introduced between the fibers 1. In this case, the fibrous-mass product 10b can have water retentivity provided by the second water retention material in addition to the original water retentivity provided by the void 2 between the fibers 1. The second water retention material may, for example, be introduced into the fibrous-mass product 10b as follows: the fibers 1 are granulated into the fibrous-mass product 10b as the base 10, and the second water retention material is added during the granulation. It is also effective to coat the surface of the fiber 1 with the second water retention material. The second water retention material introduced into the fibrous-mass product 10b by these techniques is preferably exposed in the void 2 between the fibers 1. In this case, the water retentivity of the void 2 of the fibrous-mass product 10b is significantly improved.

The second water retention material may be a polymeric water retention material having water absorbency. Examples of such a polymeric water retention material include synthetic polymers such as polyacrylate polymer, polysulfonate polymer, polyacrylamide polymer, polyvinyl alcohol polymer, polyalkylene oxide polymer, etc., and natural polymers such as polyaspartate polymer, polyglutamate polymer, polyalginate polymer, cellulose polymer, starch, etc. These second water retention materials may be used in combination. Also, a porous material, such as ceramics, etc., may be used as the second water retention material.

The fibrous-mass product 10b is manufactured using a known granulation technique. For example, the fibers 1 are aligned using a carding device, etc., before being cut into pieces having a length of about 3-10 mm. The cut fibers 1 are granulated into grains by tumbling granulation, fluidized bed granulation, agitation granulation, compression granulation, extrusion granulation, etc., to form the fibrous-mass product 10b. During the granulation, the fibers 1 may be mixed with a binder, such as resin, glue, etc. However, the fibers 1 easily interlock to be joined firmly together. Therefore, the fibers 1 may be formed into a mass without using a binder.

As shown in FIG. 2(b), an outer surface portion of the fibrous-mass product 10b configured as the base 10 may be covered by a control layer 20. By providing the control layer 20, the moisture absorption and release characteristics of the fibrous-mass product 10b can be more precisely controlled. The control layer 20 is a membrane having considerably small holes which can pass water molecules. Alternatively, the control layer 20 may be a permeable membrane through which water can move from one side thereof to the other side thereof. The control layer 20 may, for example, be formed on the outer surface portion of the fibrous-mass product 10b as follows. Initially, the fibrous-mass product 10b produced by the granulation is placed in a container. Water is added to the container, where the volume of the water is about half the volume (occupied volume) of the fibrous-mass product 10b, so that the water is caused to permeate the voids 2 of the fibrous-mass product 10b. Next, a resin emulsion is added to the fibrous-mass product 10b impregnated with water, where the volume of the resin emulsion is 1/3-1/2 of the volume of the fibrous-mass product 10b. The resin emulsion may be mixed with an additive, such as a pigment, aroma chemical, fungicide, antimicrobial, air freshener, insecticide, etc. Next, while the fibrous-mass product 10b is tumbled so that the resin emulsion adheres to the outer surface portion uniformly, the resin emulsion is allowed to permeate the fibrous-mass product 10b through the outer surface portion. In this case, a central portion of the fibrous-mass product 10b is already filled with water, and therefore, the resin emulsion remains in the vicinity of the outer surface portion of the fibrous-mass product 10b. Next, the fibrous-mass product 10b with the adhering resin emulsion is dried in an oven, followed by melting the resin, so that the resin is fused with the fibers 1 in the vicinity of the outer surface portion of the fibrous-mass product 10b to form the resin coating as the control layer 20. As a result, the outer surface portion of the fibrous-mass product 10b is covered by the control layer 20. Thus, the production of the artificial soil particle 50b is completed. When the resin is melted, a solvent contained in the resin emulsion evaporates, so that a porous structure is formed in the control layer 20. The artificial soil particle 50b thus obtained is optionally dried and classified so that the particle size thereof is adjusted. The control layer 20 may be formed to have a thickness which slightly extends inward from the outer surface portion of the fibrous-mass product 10b so that an interlocked portion of the fibers 1 (a portion in which the fibers 1 are in contact with each other) included in the fibrous-mass product 10b is reinforced. As a result, the strength and durability of the artificial soil particle 50b can be further improved. The thickness of the control layer 20 is set to 1-200 µm, preferably 10-100 µm, more preferably 20-60 µm. Note that the control layer 20 may be provided when necessary. The fibrous-mass product 10b without the control layer 20 may be directly used as the artificial soil particle 50b.

A short fiber may be used as the fiber 1 to produce the fibrous-mass product 10b by granulation. The length of the short fiber is preferably about 0.01-3 mm. In this case, the short fiber is agitated using an agitation/mixing granulator while adding the resin emulsion in small amounts. As a result, a portion of the short fibers forming the fibrous-mass product 10b is fixed together, whereby the base 10 can become robust. Note that the short fibers may be granulated by adding water thereto before adding the resin emulsion to complete the production of the fibrous-mass product 10b.

The control layer 20 is preferably formed of a material which is insoluble in water and highly resistant to oxidation. An example of such a material is a resin material. Examples of such a resin material include polyolefin resins such as polyethylene, polypropylene, etc., vinyl chloride resins such as polyvinyl chloride, polyvinylidene chloride, etc., polyester resins such as polyethylene terephthalate, etc., and styrol resins such as polystyrene, etc. Of them, polyethylene is preferable. Also, instead of the resin material, a synthetic polymeric gelling agent such as polyethylene glycol, etc., or a natural gelling agent such as sodium alginate, etc., may be used.

Ion exchange capability may be imparted to the fibrous-mass product 10b and the control layer 20. If ion exchange capability is imparted to at least one of the fibrous-mass product 10b and the control layer 20, the artificial soil particle 50b can hold fertilizer components required for the growth of a plant, and therefore, an artificial soil medium which has the ability to grow a plant which is similar to that of natural soil can be achieved.

The artificial soil particle 50b including, as the base 10, the fibrous-mass product 10b which is an aggregate of fibers configured as described above, has characteristics that it relatively easily absorbs moisture from the external environment and relatively easily releases moisture to the external environment, and therefore, functions as an early absorption and release type artificial soil particle (the second artificial soil particle 50b) which absorbs and releases moisture at a high rate. The second artificial soil particle 50b has more rapid moisture release characteristics than those of the first artificial soil particle 50a.

### <Artificial Soil Medium>

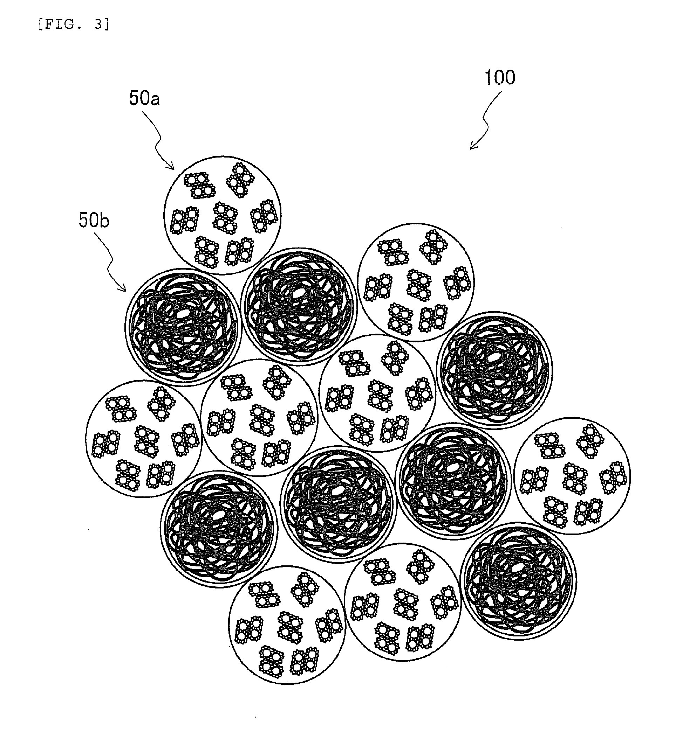

The artificial soil medium 100 of the present invention includes a plurality of types of artificial soil particles 50 which have different moisture absorption and release characteristics. FIG. 3 is a diagram for describing an example artificial soil medium 100 including a mixture of the late absorption and release type first artificial soil particle 50a having a late moisture absorption and release rate (gradual moisture absorption and release characteristics) shown in FIG. 2(a), and the early absorption and release type second artificial soil particle 50b having an early moisture absorption and release rate (rapid moisture absorption and release characteristics) shown in FIG. 2(b) at a mixture ratio of about 50:50. In this case, in the artificial soil medium 100, there is a high probability that the first artificial soil particle 50a and the second artificial soil particle 50b are in contact with each other. The present inventors' extensive research has demonstrated that if an artificial soil medium in which the first artificial soil particle 50a and the second artificial soil particle 50b are in contact with each other or are substantially in contact with each other is watered, moisture and nutrients have a particular behavior between the first and second particles. The mechanism for the behavior of moisture and nutrients required for the growth of a plant in the artificial soil medium 100 will now be described.

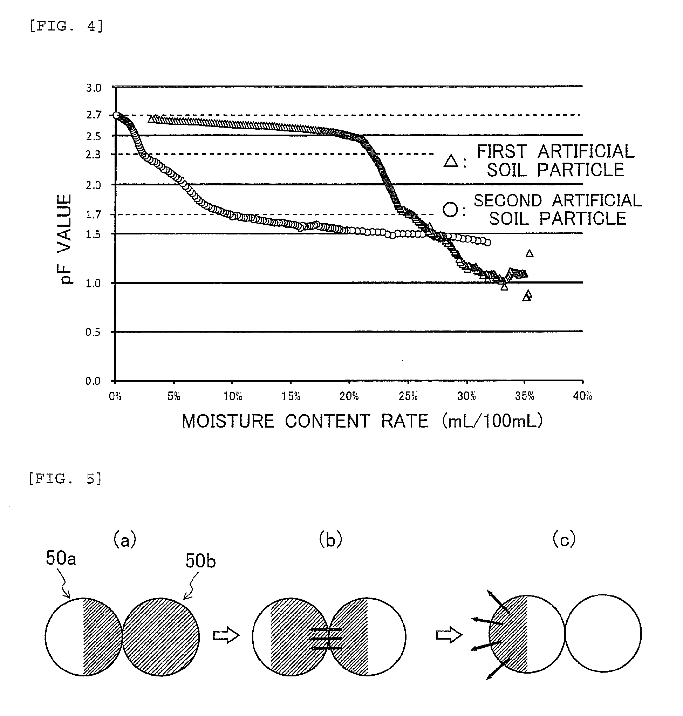

FIG. 4 is a graph showing a relationship between a moisture content rate and a pF value which are moisture absorption and release characteristics of the first and second artificial soil particles 50a and 50b. The pF value means the common logarithmic value of the suction pressure of soil moisture represented by the height of a water column, which indicates how strongly moisture in a soil is attracted by the capillary force of the soil. The pF value which is 2.0 corresponds to a pressure represented by a water column of 100 cm. The pF value also represents how much a soil is wet. If a soil contains sufficient moisture, the pF value is low and plant roots can easily absorb moisture. On the other hand, if a soil is dry, the pF value is high and plant roots require a great force to absorb moisture. If air is not present in interstices of a soil, and all the interstices are filled with water, the pF value is zero. If a soil is thermally dried at 100°C, and only water chemically bonded with the soil is present, the pF value is 7. Typically, the pF value of a soil which can grow a plant is within the range of 1.5 to 2.7. In the artificial soil medium of the present invention, if the pF value is set to be within the range of 1.5 to 2.7, a plant can grow. The pF value in the artificial soil medium of the present invention is preferably within the range of 1.7 to 2.7, more preferably 1.7 to 2.3. As can be seen from the profile of the graph of FIG. 4, when the pF value is within the range of 1.5 to 2.7, the moisture content rate of the first artificial soil particle 50a is about 5 to 27%, and the moisture content rate of the second artificial soil particle 50b is about 0 to 25%. The first and second artificial soil particles 50a and 50b have the following difference. Within the pF value range of 1.5 to 2.7, the pF value of the first artificial soil particle 50a is always higher than the pF value of the second artificial soil particle 50b, provided that the moisture content rate of the first artificial soil particle 50a is equal to the moisture content rate of the second artificial soil particle 50b. Therefore, in a soil environment including a mixture of the first and second artificial soil particles 50a and 50b, moisture moves from the second artificial soil particle 50b to the first artificial soil particle 50a.

FIG. 5 is a diagram for describing behavior of moisture between the first and second artificial soil particles 50a and 50b in a stepwise manner. In FIG. 5, the internal structures of the first and second artificial soil particles 50a and 50b are not shown, and the state of moisture inside the particles is shown by hatching. Note that this state of moisture (hatched region) is an easy-to-understand representation of the amount of moisture, and may not indicate the actual distribution of moisture in the particles.

As shown in FIG. 5(a), when the artificial soil medium 100 is watered, the first artificial soil particle 50a, which has a late moisture absorption and release rate, has not yet completely absorbed moisture, while the second artificial soil particle 50b, which has an early moisture absorption and release rate, has substantially completely absorbed moisture. After watering has been completed, the second artificial soil particle 50b releases absorbed moisture to the outside. If the release of moisture causes the pF value of the second artificial soil particle 50b to be significantly smaller than the pF value of the first artificial soil particle 50a (i.e., the moisture content rate of the second artificial soil particle 50b is about 20 to 25%), moisture is likely to move from the second artificial soil particle 50b, which has a low pF value, to the first artificial soil particle 50a, which has a high pF value. Therefore, as shown in FIG. 5(b), the first artificial soil particle 50a is being filled up due to moisture released from the second artificial soil particle 50b. Note that a portion of the moisture released from the second artificial soil particle 50b is also directly supplied to a plant, and therefore, a shortage of water that the plant needs is avoided during this period of time. As shown in FIG. 5(c), after almost all of the moisture of the second artificial soil particle 50b has been released, the first artificial soil particle 50a which has sufficiently absorbed moisture gradually releases moisture to a plant. Incidentally, if the artificial soil medium 100 is watered halfway through the release of moisture from the first artificial soil particle 50a, the steps of FIGS. 5(a)-5(c) are started over, and therefore, moisture can be perpetually supplied to a plant. Thus, in the artificial soil medium 100 of the present invention, moisture moves between the first and second artificial soil particles 50a and 50b, so that the moisture absorption and release characteristics of the first and second artificial soil particles 50a and 50b mutually complement. In addition, the moisture absorption and release characteristics of the mixture of the first and second artificial soil particles 50a and 50b have a significant synergistic effect. As a result, compared to a conventional artificial soil medium including a single type of artificial soil particles, broader moisture absorption and release characteristics can be obtained, and moisture can be continuously supplied to a plant to be grown over a long period of time, leading to a reduction in the number of times of watering. Note that if the moisture absorption and release characteristics of the plurality of types of artificial soil particles 50 included in the artificial soil medium 100 are changed, the amount of released moisture or the timing of moisture release can be arbitrarily adjusted, and therefore, an artificial soil medium can be provided in which the amount of supplied moisture is highly controlled, depending on a plant to be grown (i.e., an optimum schedule for releasing moisture is provided).

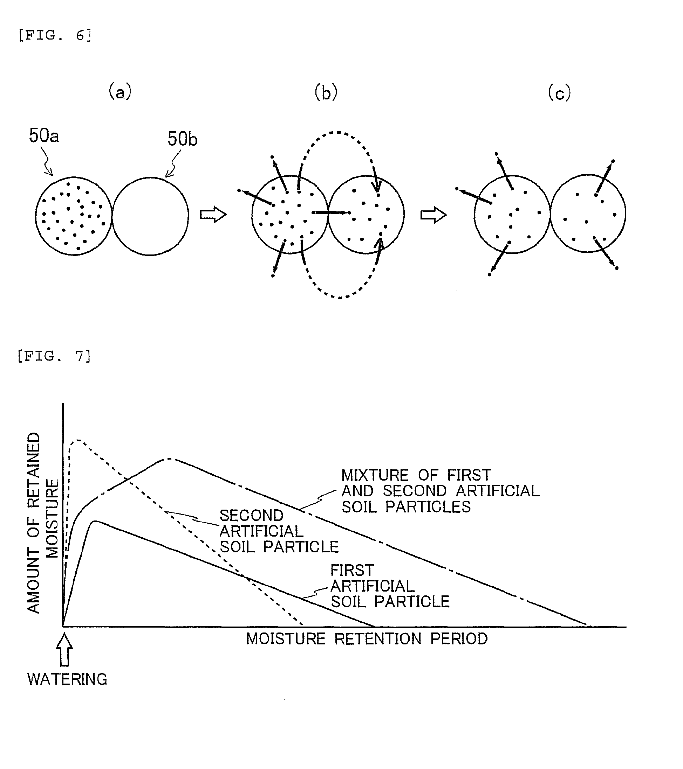

FIG. 6 is a diagram for describing behavior of nutrients between the first and second artificial soil particles 50a and 50b in a stepwise manner. As with FIG. 5, FIG. 6 does not show the internal structures of the first and second artificial soil particles 50a and 50b, and shows the state of nutrients in the particles using dots. Note that the state of nutrients (dotted region) is an easy-to-understand representation of the amount of nutrients, and is not exactly the actual distribution of nutrients in the particles.

Nutrients are absorbed by a plant along with water which dissolves the nutrients. Therefore, the way in which nutrients move is generally controlled by the behavior of moisture between the first and second artificial soil particles 50a and 50b. Here, the first artificial soil particle 50a has ion exchange capability, and therefore, as shown in FIG. 6(a), is caused to previously hold nutrients required for the growth of a plant. Examples of nutrients include three primary elements, i.e., nitrogen, phosphorus, and potassium, secondary elements, i.e., magnesium, calcium, and sulfur, trace elements, i.e., iron, copper, zinc, manganese, molybdenum, boron, chlorine, and silicate, etc. When the artificial soil medium 100 is watered, the first artificial soil particle 50a, which has a late moisture absorption and release rate, has not yet completely absorbed moisture, while the second artificial soil particle 50b, which has an early moisture absorption and release rate, has substantially completely absorbed moisture, as described above. As shown in FIG. 6(b), after watering has been completed, nutrients held in the first artificial soil particle 50a are dissolved in moisture absorbed in the first artificial soil particle 50a, and the first artificial soil particle 50a releases a portion of the nutrients along with moisture to an external plant. A portion of the nutrients of the first artificial soil particle 50a is temporarily released to the outside before being absorbed by the second artificial soil particle 50b. Note that even when the second artificial soil particle 50b is substantially filled with moisture, nutrients can move from the first artificial soil particle 50a to the second artificial soil particle 50b due to the difference in the concentration of nutrients. Thereafter, as shown in FIG. 6(c), when the first and second artificial soil particles 50a and 50b have substantially equal nutrient concentrations, nutrients are released from the first and second artificial soil particles 50a and 50b toward a plant at respective rates depending on the respective moisture release rates. In the artificial soil medium 100, moisture moves between the first and second artificial soil particles 50a and 50b, and therefore, broad moisture absorption and release characteristics are exhibited, whereby nutrients can be continuously supplied to a plant to be grown over a long period of time.

FIG. 7 is a graph showing a relationship between the time for which moisture is retained and the amount of retained moisture, of the first artificial soil particle 50a, the second artificial soil particle 50b, and a mixture of the first and second artificial soil particles 50a and 50b. In the graph, each line indicates changes over time in the amount of retained moisture after watering of a corresponding artificial soil particle. As can be seen from the graph profiles of FIG. 7, an artificial soil medium (dash-dot line) including a mixture of the first and second artificial soil particles 50a and 50b can retain moisture for a significantly longer period of time than that of an artificial soil medium (solid line) including the first artificial soil particle 50a alone or an artificial soil medium (dashed line) including the second artificial soil particle 50b alone, and therefore, has broder moisture absorption and release characteristics. This may be because moisture moves between the first and second artificial soil particles 50a and 50b in the above-described particular manner. Therefore, when the artificial soil medium 100 includes a mixture of the first and second artificial soil particles 50a and 50b, the moisture absorption and release characteristics of the first and second artificial soil particles 50a and 50b are combined, and in addition, a significant synergistic effect appears in the moisture absorption and release characteristics. As a result, moisture can be continuously supplied to a plant to be grown over a long period of time, and the amount of supplied moisture can be highly controlled, depending on a plant to be grown.

### <Other Embodiments>

In addition to the above embodiments, other possible forms of the artificial soil medium 100 of the present invention will now be described as other embodiments.

(1) The mixture ratio of the first and second artificial soil particles 50a and 50b in the artificial soil medium 100 of the present invention is not limited to about 50:50 illustrated in the above embodiment, and may be suitably changed, depending on the type of a plant to be grown, etc. For example, when a plant resistant to dry conditions is grown, the amount of the first artificial soil particle 50a may be greater than the amount of the second artificial soil particle 50b. When a plant which requires a large amount of water during the early growth period is grown, then if the amount of the second artificial soil particle 50b is greater than the amount of the first artificial soil particle 50a, moisture released from the second artificial soil particle 50b is absorbed by the first artificial soil particle 50a, and also fills spaces between the artificial soil particles, resulting in a wet soil environment. The mixture ratio of the first and second artificial soil particles 50a and 50b may be adjusted within the range of 30:70 to 70:30, depending on characteristics which are required for the artificial soil medium 100.
(2) Although, in the example artificial soil medium 100 of FIG. 3, the first artificial soil particle 50a of the late absorption and release type, and the second artificial soil particle 50b of the early absorption and release type, are mixed, the number of artificial soil particle types is not limited to two. These types of artificial soil particles may be mixed with another type of artificial soil particle having different moisture absorption and release characteristics. For example, a plurality of types of artificial soil particles having an intermediate absorption and release type, that complement the first and second artificial soil particles 50a and 50b, may be added to control multiple levels of moisture absorption and release characteristics.

### Examples

Next, examples employing the artificial soil medium of the present invention will be described. In the examples, while a plant was grown, changes in moisture-related characteristics due to a difference between artificial soil media were measured (plant growth test 1). Moreover, while a plant was grown, growth conditions of the plant were checked (plant growth test 2). Prior to the plant growth tests, a first artificial soil particle and a second artificial soil particle were produced. The first artificial soil particle and/or the second artificial soil particle were used to formulate artificial soil media for use in the examples and comparative examples.

### (Production of First Artificial Soil Particle)

Zeolite and hydrotalcite were used as a filler, sodium alginate was used as an alginate, and a 5% aqueous calcium chloride solution was used as an aqueous multivalent metal ion solution. A reagent, sodium alginate, manufactured by Wako Pure Chemical Industries, Ltd., was dissolved in water to formulate an aqueous solution having a concentration of 0.5 %. To 100 parts by weight of the 0.5% aqueous sodium alginate solution, 10 parts by weight of an artificial zeolite "Ryukyulite 600" manufactured by ECOWEL Inc., and 10 parts by weight of a reagent, hydrotalcite, manufactured by Wako Pure Chemical Industries, Ltd., were added, followed by mixing. The mixture solution was dropped into a 5% aqueous calcium chloride solution at a rate of 1 drop/sec. After the drops were gelled into particles, the gel particles were collected and washed with water, followed by drying using a drying machine at 55°C for 24 h. The dried gel particles were classified by sieving, thereby obtaining a first artificial soil particle having a size between 2 mm and 4 mm. This artificial soil particle had a cation exchange capacity of 23 meq/100 g, an anion exchange capacity of 25 meq/100 g, and a particle size of 0.2-10 mm.

### (Production of Second Artificial Soil Particle)

Vinylon short fibers (length: 0.5 mm, manufactured by KURARAY CO., LTD.) having an apparent volume of 1000 cc were agitated and tumbled using an agitation/mixing granulator (manufactured by G-Labo, Inc.) for granulation while adding an approximately 10-fold dilution of a polyethylene emulsion (SEPOLSION (registered trademark) G315 manufactured by Sumitomo Seika Chemicals Company Limited, concentration: 40% by weight) to the vinylon short fibers, thereby forming particulate fibrous-mass products impregnated with the polyethylene emulsion. Next, the same polyethylene emulsion was added, where the volume of the polyethylene emulsion was half the volume of the fibrous-mass products. The fibrous-mass products were tumbled while allowing the emulsion to uniformly adhere to the outer surface portion and permeate into the fibrous-mass products. The fibrous-mass products impregnated with the emulsion were dried using an oven at 60°C, followed by melting the polyethylene in the emulsion at 100°C, so that the polyethylene was fused with the fibers. As a result, a second artificial soil particle was produced in which the short fibers were fixed together, and the outer surface portion of the fibrous-mass product was covered by a water permeable membrane of porous polyethylene. The second artificial soil particle had a particle size of 0.5-10 mm.

### (Formulation of Artificial Soil Medium)

As Example 1, an artificial soil medium including 50% by weight of the first artificial soil particle and 50% by weight of the second artificial soil particle was formulated. As Example 2, an artificial soil medium including 30% by weight of the first artificial soil particle and 70% by weight of the second artificial soil particle was formulated. As Comparative Example 1, an artificial soil medium including only the first artificial soil particle (100% by weight of the first artificial soil particle) was formulated. As Comparative Example 2, an artificial soil medium including only the second artificial soil particle (100% by weight of the second artificial soil particle) was formulated. As Comparative Example 3, a commercially available artificial soil medium for growing plants, "SERAMIS (registered trademark)," was used.

### (Plant Growth Test 1)

A plant Pothos was planted in pots containing the respective artificial soil media. The artificial soil media were thoroughly watered during the start of growing. Thereafter, the plants were grown for 20 days without additional watering. In order to check the moisture absorption and release characteristics of each artificial soil medium, changes in the wettability, the amount of absorbed moisture, the rate of moisture release, and the number of days for which moisture is retained during the growing period were measured as moisture-related characteristics. Here, the wettability is an index of the instantaneous water retentivity of an artificial soil medium. The wettability is represented by the amount of moisture which can be instantaneously retained by an artificial soil medium per unit volume (mL/100 mL), which is calculated by a difference between the amount of water supplied to a column from the top and the amount of water drained from the bottom, where both ends of the column are open, and the column is filled with the artificial soil medium. The amount of absorbed moisture indicates the longterm water retentivity of an artificial soil medium. The amount of absorbed moisture is typically represented by the amount of moisture which can be retained by an artificial soil medium per unit volume (mL/100 mL). The amount of absorbed moisture is typically greater than the moisture value obtained by the wettability test. The rate of moisture release is a rate at which moisture is released from a pot containing an artificial soil medium to the outside of the growing system. The rate of moisture release is, for example, calculated from a reduction in the level of water surface (i.e., a reduction in the amount of water) in a vat containing water during growing, where a pot is bottom watered by immersing it in the water. The amount of evaporated water from the vat is considered to be substantially the same, and therefore, a relative reduction in the amount of water due to a difference between each artificial soil medium can be evaluated. The number of days for which moisture is retained is the number of days for which an artificial soil medium can retain moisture. The number of days for which moisture is retained is indirectly calculated from the number of days from when a plant is planted to when the plant wilts. The results of evaluation of the moisture-related characteristics of the artificial soil media are shown in Table 1.

**Table 1**

| | | Wettability | Amount of absorbed moisture | Rate of moisture release | Number of days for which moisture is retained |
|---|---|---|---|---|---|
| Example 1 | First artificial soil particle 50% + second artificial soil particle 50% | ○ | ○ | ⊚ | ⊚ |
| Example 2 | First artificial soil particle 30% + second artificial soil particle 70% | ○ | ○ | ⊚ | ⊚ |
| Comparative Example 1 | First artificial soil particle 100% | Δ-× | ○ | ○-Δ | ○ |
| Comparative Example 2 | Second artificial soil particle 100% | ○ | ○ | Δ | Δ |
| Comparative Example 3 | Commercially available artificial soil medium for growing plants | ○ | ○ | Δ | Δ |

| | | | | | |
|---|---|---|---|---|---|
| ⊚: Very good ○: Good Δ: Rather poor ×: Poor | | | | | |

The artificial soil media of Examples 1 and 2 exhibited good moisture wettability and a good amount of absorbed moisture. Also, the rate of moisture release was very good and the number of days for which moisture is retained was very good. As a result, plants which were grown in the artificial soil media of Examples 1 and 2 had good external appearance from an early period of growing, and thereafter, grew uneventfully. On the other hand, the artificial soil medium of Comparative Example 1 tended to exhibit rather poor moisture wettability and a slightly poor rate of moisture release. As a result, a portion of leaves of plants grown in the artificial soil medium of Comparative Example 1 died and discolored, resulting in a deterioration in external appearance. The artificial soil medium of Comparative Example 2 exhibited a relatively poor rate of moisture release and a poor number of days for which moisture is retained. The commercially available artificial soil medium of Comparative Example 3 exhibited a poor rate of moisture release and a poor number of days for which moisture is retained.

### (Plant Growth Test 2)

Next, seeds of a plant radish were planted in pots containing the respective artificial soil media. The artificial soil media were thoroughly watered during the start of growing. Thereafter, the plants were grown for 20 days while watering was conducted when necessary. In order to check the growing conditions of the plants, the fruit size, root length, and root diameter of the plant were measured after the growing period. The growing conditions of the plants in the artificial soil media are shown in Table 2.

**Table 2**

| | | Fruit size | Root length | Root diameter |
|---|---|---|---|---|
| Example 1 | First artificial soil particle 50% + second artificial soil particle 50% | 5.0 g | 16 mm | 16 mm |
| Example 2 | First artificial soil particle 30% + second artificial soil particle 70% | 5.5 g | 19 mm | 22 mm |
| Comparative Example 1 | First artificial soil particle 100% | 0.5 g | No roots | No roots |
| Comparative Example 2 | Second artificial soil particle 100% | 4.0 g | 14 mm | 14 mm |
| Comparative Example 3 | Commercially available artificial soil medium for growing plants | 3.0 g | 21 mm | 7 mm |

The plants grown in the artificial soil media of Examples 1 and 2 exhibited good growing conditions from an early period of growing, and thereafter, grew uneventfully. As a result, the fruit size, root length, and root diameter were all sufficient. On the other hand, the plants grown in the artificial soil medium of Comparative Example 1 failed to produce a substantial fruit or a root. The plants grown in the artificial soil medium of Comparative Example 2 had a relatively small fruit size, and a root length and root diameter which were smaller than those of Examples 1 and 2. The plants grown in the commercially available artificial soil medium of Comparative Example 3 had a sufficient root length, and a fruit size and root diameter which were smaller than those of Examples 1 and 2.

Thus, it was demonstrated that the artificial soil medium of the present invention has high basic soil functions, and good ability to grow plants, which is not inferior to that of natural soil.

### INDUSTRIAL APPLICABILITY

The artificial soil medium of the present invention is applicable to growing of plants in a plant factory, etc., and other applications, such as indoor horticultural soil media, greening soil media, molded soil media, soil conditioners, soil media for interior decoration, etc.

### REFERENCE SIGNS LIST

- 1: FIBER
- 3: FILLER
- 4: SMALL HOLE
- 10: BASE
- 10a: POROUS PRODUCT
- 10b: FIBROUS-MASS PRODUCT
- 50: ARTIFICIAL SOIL PARTICLE
- 50a: FIRST ARTIFICIAL SOIL PARTICLE
- 50b: SECOND ARTIFICIAL SOIL PARTICLE
- 100: ARTIFICIAL SOIL MEDIUM

## Claims

1. An artificial soil medium **characterized in that** it comprises a plurality of artificial soil particles including a base capable of absorbing and releasing moisture, and
the plurality of artificial soil particles include a plurality of types of artificial soil particles having different moisture absorption and release characteristics indicating a state in which the base absorbs moisture or a state in which the base releases moisture.

2. The artificial soil medium of claim 1, **characterized in that**
the plurality of types of artificial soil particles are configured to allow moisture to move between the different types of artificial soil particles.

3. The artificial soil medium of claim 1 or 2, **characterized in that**
the plurality of types of artificial soil particles include a first artificial soil particle and a second artificial soil particle having the different moisture absorption and release characteristics, and
the moisture absorption and release characteristics of the first artificial soil particle are more gradual than the moisture absorption and release characteristics of the second artificial soil particle.

4. The artificial soil medium of claim 1 or 2, **characterized in that**
the plurality of types of artificial soil particles include
(a) a first artificial soil particle having the moisture absorption and release characteristics adapted to supply moisture mainly to a plant to be grown, and
(b) a second artificial soil particle having the moisture absorption and release characteristics adapted to supply moisture mainly to the first artificial soil particle (50a).

5. The artificial soil medium of claim 1 or 2, **characterized in that**
the plurality of types of artificial soil particles include
(a) a first artificial soil particle including, as the base, a porous product produced by granulating a plurality of fillers having a small hole, and
(b) a second artificial soil particle including, as the base, a fibrous-mass product produced by aggregating fibers.

6. The artificial soil medium of any one of claims 3-5, **characterized in that**
the mixture ratio of the first and second artificial soil particles is adjusted to 30:70 to 70:30.

7. The artificial soil medium of any one of claims 1-6, **characterized in that**
ion exchange capability is imparted to at least one of the plurality of types of artificial soil particles.

8. The artificial soil medium of any one of claims 1-7, **characterized in that**
the plurality of artificial soil particles have a particle size of 0.2-10 mm.
